# EUROPÄISCHE PATENTSCHRIFT

(11) **EP 3 931 280 B1**
(45) Veröffentlichungstag und Bekanntmachung des Hinweises auf die Patenterteilung: **13.12.2023**
(21) Anmeldenummer: 20707041.8
(22) Anmeldetag: 20.02.2020
(51) Int. Cl.: C09J 7/30, C09J 7/10

(54) **KLEBEBAND, UMFASSEND MINDESTENS ZWEI VONEINANDER VERSCHIEDENE KLEBEMASSEN, WELCHE DURCH EINE BARRIERESCHICHT VONEINANDER GETRENNT SIND**
ADHESIVE TAPE, COMPRISING AT LEAST TWO ADHESIVE COMPOUNDS THAT ARE DIFFERENT FROM ONE ANOTHER AND ARE SEPARATED FROM ONE ANOTHER BY A BARRIER LAYER
BANDE ADHÉSIVE, COMPORTANT AU MOINS DEUX MATIÈRES ADHÉSIVES DIFFÉRENTES L'UNE DE L'AUTRE, SÉPARÉES L'UNE DE L'AUTRE PAR UNE COUCHE BARRIÈRE

(30) Priorität: 26.02.2019 DE 102019202569
(43) Veröffentlichungstag der Anmeldung: 05.01.2022
(73) Patentinhaber: TESA SE, 22848 Norderstedt (DE)
(72) Erfinder: KEITE-TELGENBÜSCHER, Klaus, 22529 Hamburg (DE); ZEYSING, Björn, 22393 Hamurg (DE)
(86) Internationale Anmeldenummer: PCT/EP2020/054493
(87) Internationale Veröffentlichungsnummer: WO 2020/173805

(56) Entgegenhaltungen:
- EP-A1- 2 014 734
- WO-A1-2016/131984
- FR-A1- 2 822 159

## Beschreibung

Die vorliegende Erfindung betrifft Flächenelement, welches mindestens eine erste Teilfläche T1 einer ersten Klebemasse K1, mindestens eine zweite Teilfläche T2 einer zweiten Klebemasse K2, welche von der Klebemasse K1 verschieden ist, und mindestens eine Barriereschicht umfasst, wobei die mindestens eine erste Teilfläche T1 und die mindestens eine zweite Teilfläche T2 nebeneinander in einer Ebene angeordnet sind und wobei die Barriereschicht senkrecht zwischen der mindestens einen ersten Teilfläche T1 und der mindestens einen zweiten Teilfläche T2 angeordnet ist. Weiterhin betrifft die vorliegende Erfindung Verfahren zur Verklebung zweier Fügeteile, wobei ein erfindungsgemäßes Flächenelement auf ein erstes Fügeteil aufgebracht und anschließend ein zweites Fügeteil auf das mit dem Flächenelement versehenen ersten Fügeteil gefügt wird. Zudem betrifft die vorliegende Erfindung ein Kit-of-parts, welches ein Fügeteil sowie ein erfindungsgemäßes Flächenelement oder zwei separat voneinander vorliegende Teilflächen T1 und T2, wobei eine Teilfläche eine Barriereschicht umfasst, enthält. Schließlich betrifft die vorliegende Erfindung die Verwendung eines erfindungsgemäßen Flächenelements zur Applikation eines Wirkstoffs.

### Stand der Technik

Gängige Klebesysteme für die Verklebung zweier Substrate sind Flüssigkleber, doppelseitige Selbstklebebänder, insbesondere trägerfreie sogenannte Transferklebebänder, und Hotmeltklebefolien. Übliche Verklebungsprozesse laufen so ab, dass das Klebesystem zunächst auf ein erstes Substrat aufgebracht wird. Anschließend muss dieses Vorprodukt bestehend aus dem ersten Substrat und dem Klebesystem mit dem zweiten Substrat verklebt werden.

Der Einsatz von Flüssigklebern zur Fügung zweier Substrate ist mit Problemen der optischen Qualität sowie mit Problemen beim Verkleben, nämlich der Handhabbarkeit selbst, verbunden (Handling). So kann es bei ihrem Einsatz zu Blasenbildung oder Schrumpf kommen, was die optische Qualität stark verringert. Zudem kann der Flüssigkleber zwischen den Substraten herauslaufen und somit ebenfalls die optische Qualität der Verklebung vermindern bzw. eine Reinigung der verklebten Substrate erforderlich machen.

Aus diesem Grund werden zur Fügung zweier Substrate häufig doppelseitig selbstklebende Produkte wie Transferklebebänder und doppelseitige Klebebänder verwendet. Diese zeichnen sich durch eine einfachere Handhabbarkeit und Prozessierbarkeit aus. Ihr hoher Nutzen in Anwendungsbereichen des verbindenden Klebens ergibt sich im Falle entsprechender Haftklebmassen aus deren Haftklebrigkeit und der Tatsache, dass die verwendeten Haftklebemassen nach der Applikation auf dem Substrat nicht aushärten müssen.

Bei der Fügung zweier Substrate, insbesondere im Bereich der Automobilindustrie, der Verklebung von Faserverbundstoffen sowie der Fixierung von Bauteilen im Bereich der Bau- oder Bauzulieferindustrie, müssen die Klebemassen des Klebebands neben der dauerhaften Verklebung der Substrate weitere Funktionen, beispielsweise eine Abdichtung, eine Dämpfung oder eine Versteifung, erfüllen. Gleichzeitig müssen die Klebebänder eine gute Alterungsbeständigkeit aufweisen und sich leicht anwenden lassen.

Damit die Klebebänder neben der dauerhaften Verklebung auch weitere Funktionen erfüllen können, ist es im Stand der Technik bekannt, den Träger des Klebebands nur partiell zu beschichten bzw. mehrere verschiedene Klebstoffmassen auf einem Klebeband nebeneinander aufzubringen.

Die partielle Beschichtung des Trägers führt dazu, dass sich klebstoffbeschichtete mit klebstofffreien Bereichen abwechseln. Derartige partielle Beschichtungen sind beispielsweise in der US 2,510,120 A beschrieben, wo die musterförmige Beschichtung in Streifenstrich oder anderen Geometrien zur verbesserten Wiederablösbarkeit offenbart wird. Die DE 26 10 135 A1 offenbart einen speziellen Klebmassen-Stempeldruck, die DE 28 34 441 A1 ein Hotmeltverfahren zum Auftragen eines Streifenstriches. Des Weiteren wird in der DE 23 65 532 A1 ein Hotmeltverfahren zum Auftragen von Klebemassekonturen über Druckplatten / Klischees beschrieben. Selbstklebebänder mit rasterförmigen klebmassefreien Stellen werden in der DE 974 178 genannt. Auch im Siebdruck kann der Klebmasseauftrag erfolgen (DE 42 37 252 C2), wobei die Klebstoffkalotten auch unterschiedlich groß und/oder unterschiedlich verteilt sind (EP 0 353 972 B1), die Basisfläche der einzelnen Punkte im Vergleich zu deren Projektionsfläche kleiner ist (DE 197 51 873 A1) oder die Klebmasse aus Dispersion aufgetragen wird (DE 33 46 100 A1).

Die DE 43 08 649 beschreibt das Aufbringen von zusammenhängenden Stegen aus Klebmasse in Längs- und Querrichtung im Tiefdruck. Weiterhin kann die Masse auch vollflächig aufgebracht werden und erst anschließend über Reliefwalzen (GB 836097) oder einen nachträglich aufgebrachten strukturierten Liner geformt werden. Letzteres Verfahren wird z.B. bei vielen seit Jahren im Markt befindlichen doppelseitigen Selbstklebebändern angewendet und wird auch in der EP 0 725 809 B1 beschrieben.

Bekannt sind auch Anordnungen, bei welchen mehrere Klebemassen partiell innerhalb einer Ebene nebeneinander angeordnet werden, um die Kombination der Eigenschaften von verschiedenen Klebemassentypen zu ermöglichen, jedoch Kompatibilitätsprobleme beim Mischen verschiedener Klebemassen zu vermeiden. Die FR2822159 A1 offenbart beispielsweise die Anordnung von zwei oder mehr verschiedenen Klebestreifen parallel unmittelbar nebeneinander, wobei ein Streifen bevorzugt eine aktivierbare Klebemasse und ein Streifen bevorzugt eine Haftklebemasse umfasst. In der WO2003036106 A1 wird in das innere Volumen eines ringförmigen Haftklebstoffstanzlings ein Flüssigklebstoff eingeführt, der vom Haftklebstoffring sowie den Fügepartnern am Austreten gehindert wird. Haftklebstoff und reaktiver Flüssigklebstoff kommen dabei in direkten Kontakt, liegen also in der Verklebung nebeneinander angeordnet in der Ebene vor. Bei diesen Anordnungen kann es jedoch zu einer Migration von Komponenten von der einen in die andere Klebemasse und damit zu einer verminderten Klebkraft und/oder Lagerbeständigkeit kommen.

Um innerhalb eines Klebebands die Migration von Bestandteilen zwischen verschiedenen Schichten eines Klebebands zu vermindern oder bevorzugt zu verhindern, wird im Stand der Technik der Einsatz von Barriereschichten vorgeschlagen. Diese Schichten sind als zusätzliche Schicht parallel zu den Ebenen der anderen Schichten des Klebebands angeordnet. Barriereschichten sind zu unterscheiden von Trägerschichten eines Klebebands, welche ebenfalls eine Barrierewirkung haben können, etwa bei einem doppelseitigen Klebeband, welches auf den beiden Seiten mit unterschiedlichen Klebemassen ausgerüstet ist und bei dem die Trägerschicht eine Migration von Klebemassebestandteilen von der einen in die andere Klebemasse vermindert. Im Gegensatz zu Trägerschichten tragen Barriereschichten nur unwesentlich zur mechanischen Stabilität eines Klebebands bei. Dies zeigt sich auch in den im Stand der Technik verwendeten Schichtdicken: Während Trägerschichten in der Regel in einem Dickenbereich von etwa 10 - 3000 µm verwendet werden, liegt die Schichtdicke von parallel zur Hauptebene im Klebeband angeordneten Barriereschichten in der Regel in einem Bereich von 0,02 bis 10 µm.

In der EP926213 A1 werden beispielsweise solche Barriereschichten zwischen der Trägerschicht und der Klebstoffschicht offenbart. Diese sollen die Migration von Bestandteilen aus der Trägerschicht in die Klebstoffschicht abschwächen oder vermeiden. Eine derartige Migration kann zu strukturellen Veränderungen in der Klebstoffschicht und/oder zu Ablagerungen auf der Klebstoffoberfläche und damit zu einer Reduzierung des Klebvermögens führen. Der Einsatz von verschiedenen Klebemassen, welche mittels einer Barriereschicht voneinander getrennt sind, ist hingegen nicht beschrieben. Die EP2154217 A2 offenbart selbstklebende Gegenstände mit zumindest einer Klebefläche, welche eine unter Aufnahme oder Abgabe eines Stoffs aushärtbare Klebmasse umfasst. An dem Gegenstand sind Mittel zur Steuerung entweder der Aufnahme des Stoffes aus der Umgebung in die Klebmasse oder der Abgabe des Stoffes aus der Klebmasse in die Umgebung ausgebildet. Diese Mittel werden als Dichtungsprofile längs der Seitenfläche eines Klebebands oder allseitig umlaufend an der Seitenfläche eines Etiketts ausgebildet. Die Dichtungsprofile bilden demnach eine Barriere zwischen der reaktiven Klebemasse und der Umgebung. Auf diese Weise soll ein vorzeitiges Aushärten der Klebemasse verhindert werden. Um eine Aushärtung zu erreichen, müssen diese Dichtungsprofile entfernt werden, wodurch die Handhabbarkeit dieser Gegenstände reduziert wird.

EP 2 014 734 A1 offenbart ein Klebeband mit einer ersten Zone auf einem ersten Haftklebstoff und beiner zweiten Zone aus einem wäremeaktivierbaren Klebstoff, die voneinander verschieden sind. Diese Zonen können auf einem Trägersubstrat angeordnet sein, wobei die beiden Klebstoffzonen auf der nebeneinander auf einer Ebene angeordnet sind. Die Klebezonen sind dabei auf einer Seite oder auf beiden Seiten eines Trägersubstrates angeordnet. Das Klebeband wird zum Verkleben von Fügeteilen, insbesondere Fensterprofilen, verwendet.

### Aufgabe der Erfindung

Die Aufgabe der vorliegenden Erfindung bestand demnach in der Bereitstellung eines verbesserten Verklebungssystems aus zwei voneinander verschiedenen Klebstoffen, bei welchem insbesondere eine Interaktion zwischen den verschiedenen Klebstoffen vermieden wird, ohne die wesentlichen Eigenschaften des Verklebungssystems, also z. B. die wirksame Verklebungsfläche, wesentlich zu beeinträchtigen. Vor allem soll eine Migration von Bestandteilen aus einem ersten Klebstoff in einen zweiten Klebstoff vermieden und auf diese Weise die Lagerstabilität erhöht werden. Eine weitere Aufgabe der vorliegenden Erfindung bestand in der Bereitstellung eines Verfahrens zum Fügen zweier Substrate, bei welchem das Fügemittel verschiedene Klebemassen aufweist. Darüber hinaus bestand eine weitere Aufgabe der vorliegenden Erfindung in der Bereitstellung eines Kit-of-parts, mit welchem eine Fügung zweier Substrate möglich ist.

### Lösung der Aufgabe

Die Aufgabe wird gelöst durch ein Flächenelement, welches
a) mindestens eine erste Teilfläche T1 einer ersten Klebemasse K1,
b) mindestens eine zweite Teilfläche T2 einer zweiten Klebemasse K2, welche von der Klebemasse K1 verschieden ist, und
c) mindestens eine Barriereschicht umfasst,

wobei die mindestens eine erste Teilfläche T1 und die mindestens eine zweite Teilfläche T2 nebeneinander in einer Ebene angeordnet sind,
dadurch gekennzeichnet, dass
die Barriereschicht im Wesentlichen senkrecht zwischen der mindestens einen ersten Teilfläche T1 und der mindestens einen zweiten Teilfläche T2 angeordnet ist.

Weiterhin wird die Aufgabe gelöst durch ein Verfahren zur Verklebung zweier Fügeteile, wobei das Verfahren die nachfolgenden Schritte in der angegebenen Reihenfolge umfasst:
a) Bereitstellen eines erfindungsgemäßen Flächenelements,
b) Aufbringen des Flächenelements auf ein erstes Fügeteil,
c) Fügen eines zweiten Fügeteils auf das mit dem Flächenelement versehene erste Fügeteil.

Zudem wird die Aufgabe gelöst durch ein Kit-of-parts, umfassend
a) mindestens ein Fügeteil und
b1) mindestens ein erfindungsgemäßes Flächenelement oder
b2) mindestens eine erste Teilfläche T1 oder T2 sowie mindestens eine zweite Teilfläche T2 oder T1, wobei mindestens eine Teilfläche T1 oder T2 mit einer Barriereschicht versehen ist und wobei die erste und die zweite Teilfläche separat voneinander vorliegen,
dadurch gekennzeichnet, dass das Fügeteil a) und das Flächenelement b1) oder die Teilflächen T1 und T2 b2) separat vorliegen oder dass das Flächenelement b1) oder die erste Teilfläche b2) einseitig auf das mindestens eine Fügeteil a) aufgebracht ist.

Schließlich wird die Aufgabe gelöst durch die Verwendung eines erfindungsgemäßen Flächenelements zur Applikation eines Wirkstoffs.

Der Erfindung liegt die Erkenntnis zugrunde, dass die Lagerstabilität von Klebebändern, auf welchen voneinander verschiedene Klebemassen nebeneinander in einer Ebene aufgebracht sind um die Eigenschaften von verschiedenen Klebemassentypen zu kombinieren, durch die Verwendung von Barriereschichten senkrecht zu den Klebemassen erhöht werden kann. Die Barriereschicht verhindert die Migration von Bestandteilen der einen in die andere Klebemasse. Diese Migration führt zu einer verminderten Lagerstabilität sowie Klebkraft der Klebemassen. Aufgrund der Barriereschichten ist auch die Verwendung von reaktiven oder aktivierbaren Klebstoffen in Kombination mit anderen Klebstoffen möglich, ohne dass durch Migration von Bestandteilen aus dem reaktiven oder aktivierbaren Klebstoff in andere Klebstoffmassen die Lagerstabilität oder die Klebkraft vermindert wird. Durch die senkrechte Anordnung der Barriereschicht wird kein nennenswerter Anteil der zur Verfügung stehenden Klebefläche durch die Barriereschicht verbraucht, so dass die Klebefläche nahezu vollständig ausgenutzt werden kann. Auf diese Weise wird eine Verringerung der Klebkraft aufgrund einer verminderten Klebefläche vermindert bzw. vermieden.

### Detaillierte Beschreibung der Erfindung

### Erfindungsgemäßes Flächenelement:

Das erfindungsgemäße Flächenelement weist zwei Seitenflächen, eine Vorderseite sowie eine Rückseite auf. Die Begriffe Vorderseite und Rückseite beziehen sich dabei auf die beiden Oberflächen des Flächenelements parallel zu seiner Hauptausdehnung (Flächenausdehnung, Hauptausdehnungsebene) und dienen lediglich der Unterscheidung dieser beiden auf gegenüberliegenden Seiten des Flächenelements angeordneten Flächen, ohne dass durch die Wahl der Begriffe die absolute räumliche Anordnung der beiden Flächen festgelegt ist; demzufolge kann die Vorderseite auch die räumlich hinten gelegene Seitenfläche des Flächenelements darstellen, nämlich wenn dementsprechend die Rückseite dessen räumlich vorne gelegene Seitenfläche bildet.

Das erfindungsgemäße Flächenelement ist räumlich in seiner Fläche begrenzt und weist daher einen Rand auf, der die Fläche des Flächenelements umschließt. Dies trifft ebenso auf die Teilflächen T1 und T2 zu, wobei zumindest ein Teil des Randes der beiden Teilflächen T1 und T2 jeweils mit der Barriereschicht in Kontakt steht. Das Flächenelement kann eine einheitliche Dicke oder auch innerhalb seiner Fläche verschiedene Dicken aufweisen. Insbesondere können die Teilflächen T1 und T2 in sich einheitlich, aber gegeneinander verschieden dick sein.

Erfindungsgemäß weisen die Teilflächen T1 und T2 des erfindungsgemäßen Flächenelements eine bestimmte räumliche Anordnung auf. Es ist daher erfindungsgemäß bevorzugt, wenn die mindestens eine erste Teilfläche T1 und die mindestens eine zweite Teilfläche T2 in einer Ebene parallel zur Hauptausdehnung des Flächenelements nebeneinander angeordnet sind oder die mindestens eine erste Teilfläche T1 die mindestens eine zweite Teilfläche T2 in einer Ebene insbesondere vollständig umschließt. Gemäß der ersten Alternative liegen die beiden Teilflächen T1 und T2 in einer Ebene parallel zur Hauptausdehnung des Flächenelements nebeneinander. Die zweite Alternative sieht demnach ein Flächenelement vor, bei welchem mindestens eine erste Teilfläche T1 und die mindestens eine zweite Teilfläche T2 parallel zueinander in einer Ebene angeordnet sind und die mindestens eine zweite Teilfläche T2 insbesondere vollständig von der mindestens einen ersten Teilfläche T1 umschlossen wird. Es kann auch eine Vielzahl von Teilflächen nebeneinander oder einander umschließend angeordnet sein. Dabei können nur zwei verschiedene oder auch mehrere verschiedene Klebemassen verwendet werden.

Als Klebemassen können alle dem Fachmann geläufigen Klebemassen verwendet werden. Es ist daher bevorzugt, wenn die erste Klebemasse K1 und/oder die zweite Klebemasse K2 ausgewählt sind aus der Gruppe bestehend aus expandierbaren Klebemassen, aktivierbaren Klebemassen, Haftklebemassen, aktivierbaren Haftklebemassen, expandierbaren Haftklebemassen sowie deren Mischungen. Diese können als Fluid, als Festkörper oder als viskoelastisches Material vorliegen, wie dies z. B. bei Haftklebemassen der Fall ist.

Unter expandierbaren Klebemassen werden erfindungsgemäß Klebemassen verstanden, bei welchen das Volumen der Klebemasse nach der Expansion größer ist als vor der Expansion, gemessen jeweils bei gleicher Temperatur (in der Regel Raumtemperatur, 15 bis 30 °C). Bevorzugt liegt die Volumenzunahme bei mehr als 5 %. Die Expansion kann chemisch oder physikalisch erfolgen. Bevorzugt umfasst die Klebemasse ein thermisch aktivierbares Schäumungsmittel.

Als aktivierbare Klebemasse können grundsätzlich alle üblichen aktiviert verklebenden Klebemassensysteme zum Einsatz gelangen. Die Aktivierung erfolgt in der Regel über einen Energieeintrag, z.B. durch aktinische Strahlung, Wärme oder mechanische Energie, wie z. B. Ultraschall oder Reibung.

Hitzeaktiviert verklebende Klebemassen lassen sich grundsätzlich in zwei Kategorien einordnen: thermoplastische hitzeaktiviert verklebende Klebemassen (Schmelzklebstoffe) und reaktive hitzeaktiviert verklebende Klebemassen (Reaktivklebstoffe). Diese Einteilung enthält auch solche Klebemassen, welche sich beiden Kategorien zuordnen lassen, nämlich reaktive thermoplastische hitzeaktiviert verklebende Klebemassen (reaktive Schmelzklebstoffe).

Thermoplastische Klebemassen basieren auf Polymeren, welche bei einem Erwärmen reversibel erweichen und während des Erkaltens wieder erstarren. Als thermoplastische Klebemassen haben sich insbesondere solche auf der Basis von Polyolefinen und Copolymeren von Polyolefinen sowie von deren säuremodifizierten Derivaten, von lonomeren, von thermoplastischen Polyurethanen, von Polyamiden sowie Polyestern und deren Copolymeren und auch von Blockcopolymeren wie Styrol-Blockcopolymeren als vorteilhaft herausgestellt.

Im Gegensatz dazu enthalten reaktive hitzeaktiviert verklebende Klebemassen reaktive Komponenten, z.B. Monomere oder Oligomere mit reaktiven chemischen Gruppen. Letztere Bestandteile werden auch als "Reaktivharze" bezeichnet, in denen durch das Erwärmen ein Vernetzungsprozess eingeleitet wird, der nach Beendigen der Vernetzungsreaktion eine dauerhafte stabile Verbindung gewährleistet. Bevorzugt enthalten derartige Klebemassen auch elastische Komponenten, zum Beispiel synthetische Nitrilkautschuke oder Stryrolblockcopolymere. Derartige elastische Komponenten verleihen der hitzeaktiviert verklebenden Klebemasse infolge ihrer hohen Fließviskosität eine auch unter Druck besonders hohe Dimensionsstabilität.

Strahlungsaktivierte Klebemassen basieren ebenfalls auf reaktiven Komponenten. Letztere Bestandteile können z.B. Monomere, Polymere oder Reaktivharze umfassen, in denen durch die Bestrahlung ein Vernetzungsprozess eingeleitet wird, der nach Beendigen der Vernetzungsreaktion eine dauerhafte stabile Verbindung gewährleistet. Bevorzugt enthalten derartige Klebemassen auch elastische Komponenten, wie sie oben ausgeführt sind.

Als Haftklebemassen werden Klebemassen bezeichnet, welche bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften. Als Basis für Haftklebemassen kommen verschiedene Verbindungen in Frage.

Als Haftklebemasse können alle dem Fachmann bekannten Haftklebemassen eingesetzt werden, also z.B. solche auf der Basis von Acrylaten und/oder Methacrylaten, Polyurethanen, Naturkautschuken, Synthesekautschuken, Styrolblockcopolymermassen mit einem Elastomerblock aus ungesättigten oder hydrierten Polydienblöcken (Polybutadien, Polyisopren, Copolymeren aus beiden sowie weitere, dem Fachmann geläufige Elastomerblöcke), Polyolefinen, Fluorpolymeren und/oder Silikonen. Darunter fallen auch weitere Massen, die haftklebende Eigenschaften entsprechend dem "Handbook of Pressure Sensitive Adhesive Technology" von Donatas Satas (Satas & Associates, Warwick 1999) besitzen.

Im Rahmen der vorliegenden Erfindung ist es bevorzugt, wenn das erfindungsgemäße Flächenelement bestimmte Klebemassen K1 und/oder K2 aufweist. Bevorzugt handelt es sich bei der ersten Klebemasse K1 um eine Haftklebemasse, insbesondere eine acrylatbasierte Haftklebemasse.

Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschreiben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen, wobei die Aufzählung der Additive nur beispielhaft und nicht einschränkend zu verstehen ist. "Auf der Basis von" oder "auf der Grundlage von" bedeutet vorliegend, dass die Eigenschaften der Polymermischung zumindest stark von den grundlegenden Eigenschaften dieses Polymers (dem so genannten "Basispolymer") bestimmt werden, wobei selbstverständlich nicht ausgeschlossen ist, dass diese durch Verwendung von modifizierenden Hilfs- oder Zusatzstoffen oder von weiteren Polymeren in der Zusammensetzung zusätzlich beeinflusst werden. Insbesondere kann dies bedeuten, dass der Anteil des Basispolymers an der Gesamtmasse der polymeren Phase mehr als 50 Gew.-% beträgt.

Besonders bevorzugt sind acrylatbasierte Haftklebemasseflächen, welche mittels Extrusion (z. B. analog der EP 2 235 098 B1) oder nach dem UV-Sirupverfahren (z.B. analog der US 5,902,836 A) hergestellt sind, da mittels dieser Verfahren besonders dicke und klebstarke Haftklebemasseschichten hergestellt werden können.

Der Einsatz von Haftklebemassen als Klebemasse K1 ist insbesondere dann bevorzugt, wenn die mindestens eine erste Teilfläche T1 die zumindest eine zweite Teilfläche T2 in einer Ebene vollständig umschließt. Bei dieser Ausführungsform bildet die Haftklebemasse K1 somit den äußeren Rand des Flächenelements. Solche Anordnungen haben den Vorteil, dass als zweite Klebemasse K2 auch fluide Klebemassen verwendet werden können. Die Haftklebemasse K1 wirkt dann als mechanische Barriere, welche ein Auseinanderfließen der fluiden Klebemasse verhindert und somit die Anwendung erleichtert sowie die Lagerfähigkeit des Flächenelements verbessert. Als fluide Klebemasse wird bevorzugt eine aktivierbare Klebemasse (z. B. ein Reaktivklebstoff) verwendet.

Es ist daher erfindungsgemäß bevorzugt, wenn es sich bei der zweiten Klebemasse K2 um eine aktvierbare Klebemasse handelt, welche eine dynamische Viskosität von 10⁻¹ bis 10⁸ Pa*s (gemessen mittels DIN 53019-1:2008-09 oder ISO 6721-10:1999-12 bei 25 °C) aufweist oder welche in Form eines Films vorliegt. Bei dieser aktivierbaren Klebemasse handelt es sich somit um eine fluide Klebemasse bzw. um einen aktvierbaren Klebemassefilm, der bei Raumtemperatur haftklebrig sein kann, bevorzugt aber nicht haftklebrig ist. Die Viskosität wird in einem Zylinderrotationsviskosimeter mit einer Standardgeometrie nach DIN 53019-1:2008-09 bei einer Messtemperatur von 25 °C und einer Schergeschwindigkeit 1 s-1 gemessen. Da mit dieser Methode sehr hohe Viskositäten nicht ermittelt werden können, ist auch die Bestimmung der (komplexen) Viskosität nach ISO 6721-10:1999-12 bei 25 °C und einer Frequenz von 1 rad/s üblich. Die aktivierbare Klebemasse ist nicht in der Art ihrer Fließfähigkeit eingeschränkt, es kann sich daher um eine Newtonsche, Dilatante, Pseudoplastische, plastische (nach Bingham- oder Casson-Fluide, scherzeitabhängige, thixotrope oder rheopexe Flüssigkeit handeln. Durch den Einsatz einer fluiden aktivierbaren Klebemasse wird nach der Härtung eine besonders hohe Festigkeit der Verklebung erreicht. Bei Verwendung eines nicht haftklebrigen aktivierbaren Klebemassenfilms wird die Positionierung des Flächenelements während der Anwendung erleichtert.

In einer alternativen Ausführungsform handelt es sich bei der ersten Klebemasse K1 und/oder bei der zweiten Klebemasse K2 um eine expandierbare Klebemasse. Diese Klebemassen bzw. Haftklebemassen sind bevorzugt durch Schäumen expandierbar. Damit können Dickentoleranzen in der Klebefuge zwischen den Fügeteilen oder in den Teilflächen T1 und T2 ausgeglichen werden. Die Expansion der ersten und/oder zweiten Klebemasse wird vorteilhaft nach der Herstellung der Verklebung ausgelöst, z. B. durch Hitzeaktivierung.

In einer weiteren alternativen Ausführungsform handelt es sich bei der ersten Klebemasse K1 und bei der zweiten Klebemasse K2 jeweils um eine Haftklebemasse. Dies verbessert die Anfangshaftung des erfindungsgemäßen Flächenelements.

In diesem Zusammenhang ist es bevorzugt, wenn die erste Klebemasse K1 oder die zweite Klebemasse K2 eine aktivierbare Haftklebemasse ist. Hierdurch kann eine hohe Anfangsfestigkeit verbunden werden mit einer hohen Endfestigkeit nach Aktivierung der aktivierbaren Haftklebemasse.

Bevorzugt liegt die Dicke der Barriereschicht in der gleichen Größenordnung wie die Schichtdicke des Flächenelements im Bereich der Barriereschicht oder darunter. Die Dicke der Barriereschicht ist dabei in der für die Barrierewirkung wirksamen Richtung angegeben, liegt also parallel zur Ebene des Flächenelements. In der gleichen Größenordnung bedeutet, dass der Zahlenwert etwa das 0,32- bis 3,2-fache des Vergleichszahlenwerts beträgt. Bevorzugt ist die Dicke der Barriereschicht geringer als die Dicke des Flächenelements im Bereich der Barriereschicht. Es ist daher bevorzugt, wenn die Barriereschicht eine Dicke von 20 nm bis 500 µm, vorzugsweise von 20 nm bis 1 µm oder von 500 nm bis 50 µm, aufweist. Unterhalb von 20 nm ist die Barrierefunktion nicht mehr zuverlässig, oberhalb von 500 µm belegt die Barriereschicht einen nicht mehr zu vernachlässigendem Anteil der Verklebungsfläche. Der Bereich von 20 nm bis zu 1 µm ist besonders bevorzugt, da in diesem Bereich wirksame anorganische oder organisch-anorganische Hybridschichten aufgebracht werden können. Der Bereich von 500 nm bis zu 50 µm wird bevorzugt, da in diesem Dickenbereich wirksame organische Barriereschichten aufgebracht werden können. Die Wahl von organischen oder anorganischen oder hybriden Barriereschichten ist dabei nicht durch die Wahl der Dicke (oder umgekehrt) eingeschränkt.

Die Barriereschicht kann aus dem Fachmann geläufigen Barrierematerialien hergestellt sein. Als anorganische Barriereschichten eignen sich besonders gut im Vakuum (zum Beispiel mittels Verdampfen, CVD, PVD, PECVD) oder unter Atmosphärendruck (zum Beispiel mittels Atmosphärenplasma, reaktiver Coronaentladung oder Flammenpyrolyse) abgeschiedene Metalle, wie Aluminium, Silber, Gold, Nickel oder insbesondere Metallverbindungen wie Metalloxide, - nitride oder -hydronitride, beispielsweise Oxide oder Nitride des Siliziums, des Bors, des Aluminiums, des Zirkoniums, des Hafniums, des Tellurs oder Indium-Zinn-Oxid (ITO). Weiterhin können auch Halbmetalle, wie beispielsweise Silizium, und Halbmetallverbindungen, insbesondere Halbmetalloxide, Halbmetallnitride und Halbmetallhydronitride, verwendet werden. Ebenfalls geeignet sind mit weiteren Elementen dotierte Schichten der vorstehend genannten Varianten. Als weitere geeignete Verfahren zum Aufbringen einer anorganischen Barriereschicht sind High-Power-Impulse-Magnetron-Sputtering und Atomic-Layer-Deposition zu nennen, durch die sich besonders permeationsdichte Schichten bei geringer Temperaturbelastung der Trägerschicht verwirklichen lassen.

Bevorzugt sind auch organisch-anorganische Hybridschichten, z. B. Sol-Gel-Schichten.

Weiterhin bekannt sind organische Schichten, bevorzugt solche aus der Gruppe bestehend aus Polyamiden, Ethylenvinylalkoholen (EVOH), Polyvinylalkohol (PVOH), Polyvinylidenchloriden (PVDC), Flüssigkristallpolymeren (LCP), Polyethylenen und dessen Copolymeren, Nitril-Copolymeren, Fluorpolymeren, Polypropylenen, Polyestern, Polyvinylchloriden, Polystyrolen und Polylactiden. Besonders bevorzugt sind solche aus der Gruppe bestehend aus Polyamiden, Ethylenvinylalkoholen (EVOH), Polyvinylalkohol (PVOH), Polyvinylidenchloriden (PVDC) sowie Nitril-Copolymeren.

Auch Lacke können verwendet werden, insbesondere vernetzte Lacksysteme. Bevorzugt sind UV-vernetzte Lacke auf der Basis von Acrylaten und/oder Methacrylaten (siehe beispielsweise J. Oliver et. al.: Influences on Barrier Performance of UV/EB Cured Polymers RadTech conference USA 2010).

Darüber hinaus eignen sich auch die in Miller, K. S. and J. M. Krochta (1997). "Oxygen and aroma barrier properties of edible films: A review." Trends in Food Science & Technology 8(7): 228-237 beschriebenen Schichten als Barriereschicht.

Bevorzugt ist die Barriereschicht daher ausgewählt aus der Gruppe von (i) Metallen, Metallverbindungen, wie Metalloxiden, Metallnitriden und Metallhydronitriden, sowie dotierten Metallen und Metallverbindungen, (ii) organisch-anorganischen Hybridschichten, (iii) organischen Barriereschichten, wie Polyamiden, Ethylenvinylalkoholen (EVOH), Polyvinylalkohol (PVOH), Polyvinylidenchloriden (PVDC), Flüssigkristallpolymeren (LCP), Polyethylenen und dessen Copolymeren, Nitril-Copolymeren, Fluorpolymeren, Polypropylenen, Polyestern, Polyvinylchloriden, Polystyrolen, Polylactiden, sowie (iv) deren Mischungen, insbesondere Polyamiden, Ethylenvinylalkoholen (EVOH), Polyvinylalkohol (PVOH), Polyvinylidenchloriden (PVDC) und Nitril-Copolymeren.

In diesem Zusammenhang ist es besonders bevorzugt, wenn es sich bei der Barriereschicht um eine anorganische Barriereschicht aus Metallen, Metallverbindungen sowie dotierten Metallen und Metallverbindungen, welche aus einem Plasma heraus, besonders bevorzugt unter Atmosphärendruck, abgeschieden wurden, handelt.

Plasma wird als 4. Aggregatzustand von Materie bezeichnet. Es handelt sich um ein teilweise beziehungsweise vollständig ionisiertes Gas. Durch Energiezufuhr werden positive und negative Ionen, Elektronen, andere angeregte Zustände, Radikale, elektromagnetische Strahlung und chemische Reaktionsprodukte erzeugt. Viele dieser Spezies können zu Veränderungen der zu behandelnden Oberfläche führen. Das verwendete Gas wird mit gasförmigen oder flüssigen Precursoren angereichert, um die Barriereschicht herzustellen.

In einer weiteren bevorzugten Ausführung wird die Barriereschicht durch chemische Modifikation mindestens eines Teils des Randes der Teilflächen T1 und/oder T2 erzeugt. Hierbei wird ein Teil des Volumens der Teilflächen T1 und/oder T2 in die Barriereschicht umgewandelt. Dies kann z.B. durch Vernetzung, Polymerisation oder Härtung der Randschicht erfolgen. Die chemische Modifikation kann beispielsweise durch Aufbringen chemischer Agentien auf den Rand, durch aktinische Strahlung, Plasmabehandlung, Stoff- oder Wärmeeintrag erfolgen.

Weiterhin kann es erfindungsgemäß vorgesehen sein, die Barriereschicht mit anderen Barriereschichten und/oder weiteren Zwischenschichten zu kombinieren (auch als Mehrschichtsysteme bezeichnet).

Bevorzugt weist die Barriereschicht eine Permeationsbarriere gegen Wasserdampf (WVTR) von < 100 g/(m^{2*}d) und/oder gegen Sauerstoff (OTR) von < 1000 cm³/(m²*d*bar), jeweils bezogen auf die Dicke der Barriereschicht und gemessen gemäß ASTM F-1249-13 (WVTR, 38° C und 90 % relativer Luftfeuchtigkeit) bzw. DIN 53380-3:1998-07 (OTR, 23° C und 50 % relativer Luftfeuchtigkeit), auf.

Die Bildung des Flächenelements aus den zumindest zwei Teilflächen T1 und T2 und der mindestens einen Barriereschicht kann unmittelbar vor dem Herstellen der Verklebung erfolgen oder die Teilflächen T1 und T2 sowie die Barriereschicht sind in lagerfähiger Form derart miteinander verbunden, dass sie gemeinsam bereitgestellt und auf ein Fügeteil appliziert werden können, z.B. als Klebeband. Bevorzugt wird zumindest eine Teilfläche T1 oder T2 des Flächenelements als Klebeband oder Klebebandabschnitt zur Verfügung gestellt. Diese Teilfläche T1 oder T2 umfasst bevorzugt die Barriereschicht. Besonders bevorzugt wird das gesamte Flächenelement als Klebeband oder Klebebandabschnitt zur Verfügung gestellt. Dies kann beispielsweise durch die Anordnung auf einem beide Teilflächen T1 und T2 und die Barriereschicht zumindest jeweils teilweise überdeckenden Liner oder Trägermaterial erreicht werden. Damit werden die Teilflächen T1 und T2 sowie die Barriereschicht relativ zueinander in ihrer Position fixiert und können leicht appliziert werden.

Der Ausdruck "Klebeband" umfasst ein Trägermaterial, welches ein- oder beidseitig mit dem erfindungsgemäßen Flächenelement versehen ist. Um Unebenheiten möglichst zu minimieren, sollte der Träger eine kleinstmögliche Stärke aufweisen. Weiterhin umfasst der Ausdruck "Klebeband" im Sinne der vorliegenden Erfindung auch sogenannte "Transferklebebänder", das heißt ein Klebeband ohne Träger. Bei einem Transferklebeband ist das Flächenelement vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, das Flächenelement appliziert und dann der zweite Liner entfernt. Das Flächenelement kann so direkt zur Verbindung zweier Oberflächen verwendet werden. Derartige trägerlose Transferklebebänder sind erfindungsgemäß besonders bevorzugt. Mit einem solchen haftklebrigen trägerlosen Transferklebeband wird eine in Positionierung und Dosierung sehr genaue Verklebung ermöglicht.

Es sind auch Klebebänder möglich, bei denen nicht mit zwei Linern, sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Schichten, wie sie dem Fachmann im Bereich der Klebebänder geläufig sind, können ebenfalls enthalten sein, wie z.B. weitere Klebstoff- oder Trägerschichten, Primer oder Releaseschichten oder Schichten mit spezifischen physikalischen Funktionen (z.B. optisch wirksame Schichten, perrmeationshemmende oder -fördernde Schichten, thermisch oder elektrisch leitfähige Schichten). Der Klebebandabschnitt kann z.B. als Blatt oder als Rolle oder als Stanzling zur Verfügung gestellt werden. Er kann die von seinem äußeren Umfang eingegrenzte Fläche vollständig bedecken oder auch Teile davon freilassen, wie z.B. bei einem rahmenförmigen Stanzling oder einem perforierten Abschnitt.

In einer bevorzugten Ausführungsform liegen die zumindest zwei Teilflächen T1 und T2 der Klebemassen K1 und K2 daher als Klebebandstreifen vor, welche nebeneinander in einer Ebene angeordnet sind. Diese Ausführung ist bevorzugt als Klebeband auf eine Rolle gewickelt. Bevorzugt liegen die zumindest zwei Teilflächen T1 und T2 auf einem gemeinsamen Liner angeordnet vor, welcher die Flächen relativ zueinander fixiert. Die Barriereschicht (0 wurde bevorzugt zuvor auf die Kante einer der Teilflächen T1 oder T2 appliziert, wonach diese Teilfläche parallel zur anderen Teilfläche neben diesen positioniert wurde.

Es ist daher erfindungsgemäß besonders bevorzugt, wenn das Flächenelement zusätzlich mindestens einen Liner L und/oder ein Trägermaterial TM umfasst, wobei die mindestens eine erste Teilfläche T1 und/oder die mindestens eine zweite Teilfläche T2 auf dem Liner L und/oder dem Trägermaterial TM angeordnet sind. In dieser Ausführungsform liegt das erfindungsgemäße Flächenelement demnach wie vorstehend beschrieben als Klebeband vor.

### Herstellung des erfindungsgemäßen Flächenelements:

Die Herstellung der Teilflächen T1 und T2 des erfindungsgemäßen Flächenelements kann in Substanz, in Lösung, in Dispersion oder in der Schmelze mit Verfahren erfolgen, welche dem Fachmann zur Herstellung von Schichtkörpern, insbesondere von Klebemasseschichten, bekannt sind. Solche Verfahren sind z. B. beschrieben in "Handbook of Pressure Sensitive Adhesive Technology" von Donatas Satas (Satas & Associates, Warwick 1999) oder Habenicht, G.: Kleben 6. Ed.; Springer 2009. Die verschiedenen Teilflächen T1 und T2 können mit dem gleichen oder mit verschiedenen Verfahren hergestellt werden.

Die Herstellung des erfindungsgemäßen Flächenelements kann in einem Schritt oder in mehreren aufeinander folgenden Schritten erfolgen. So ist z. B. bekannt, mehrere nebeneinanderliegende Polymerschichten in einem Arbeitsgang aus einer Düse zu extrudieren (z. B. US 4,476,165 A Acumeter 1982). Auch der Streifenstrich in der Beschichtungstechnologie kann mittels einer Mehrfachdüse mehrere Streifen gleichzeitig nebeneinander applizieren. Vorteil einer solchen Verfahrensweise ist die hohe Produktivität. Nachteilig sind der hohe apparative und verfahrenstechnische Aufwand sowie die Gefahr, dass die Streifen ineinander verfließen.

Bevorzugt erfolgt daher eine sequentielle Herstellung der Teilflächen T1 und T2 sowie der Barriereschicht. Dabei können Subsysteme, wie z. B. eine Teilfläche T1 oder T2 und eine Barriereschicht auch gleichzeitig miteinander hergestellt werden. Zumindest das erfindungsgemäße Flächenelement wird aus mehreren Subsystemen zusammengefügt.

Weiterhin ist es bevorzugt, wenn zuerst eine erste Teilfläche T1 hergestellt, diese dann an der zur späteren Teilfläche T2 zeigenden Seite mit der Barriereschicht versehen und sodann die zweite Teilfläche T2 angefügt wird.

Wenn das Flächenelement als Klebeband bereitgestellt wird, kann es vorgesehen sein, alle Seitenkanten des Flächenelements mit der weiteren Barriereschicht zu versehen. Dazu können im Stand der Technik bekannte Verfahren verwendet werden, z. B. die Lack- oder Polymerbeschichtung (vgl. EP 1 373 423 sowie US 2010/00447530) oder der Transfer von bereitgestellten Barriereschichten (vgl. WO 2016/131984 A1). Auch die Herstellung der zusätzlichen Barriereschicht durch Modifikation der am Klebebandrand befindlichen Teilfläche T1 und/oder T2 ist denkbar (vgl. WO 2008/095653 A1).

Besonders bevorzugt erfolgt die Herstellung der Barriereschicht in Anlehnung an die WO 2016/131984 A1, bei welchem einem Atmosphärendruck-Plasmastrom ein bevorzugt organische polyfunktionelle Silane aufweisender Precursor zugeführt wird. Der mit dem Precursor angereicherte Plasmastrom wird auf die Teilflächenkante bzw. Kante des Flächenelements oder auch den Wickelspiegel einer Klebebandrolle gerichtet und die Kante auf diese Weise mit einer Beschichtung, bevorzugt mit einer SiOₓ-Beschichtung, überzogen. Günstigerweise wird der mit dem Precursor angereicherte Plasmastrom direkt auf die jeweilige Kante oder den Wickelspiegel gerichtet, so dass die Seite der einen Teilfläche, welche später zu der anderen Teilfläche zeigt, unmittelbar und direkt mit einer Beschichtung überzogen wird.

Die für die Klebebänder beschriebenen Verfahren zur Herstellung der Barriereschicht werden bevorzugt auch für Klebebandabschnitte, insbesondere Stanzlinge verwendet. Besonders bevorzugt wird die Barriereschicht bei einem Stanzling aufgebracht, bei dem die von seinem äußeren Umfang eingegrenzte Fläche zum Teil nicht von Klebemasse ausgefüllt ist, wie z.B. bei einem rahmenförmigen Stanzling. Hierbei ist es vorteilhaft, die Grenzfläche am inneren Umfang mit der Barriereschicht zu versehen. Die innere Teilfläche T2 wird dann bevorzugt mit einem Klebstoff K2 ausgefüllt, welcher als Fluid vorliegt oder einen kalten Fluss aufweist.

Sogenannter "Kalter Fluss" ist ein Ausdruck für das Kriechen, d. h. die irreversible Verformung eines Klebstoffkörpers unter Lasteinwirkung bei Raumtemperatur. Insbesondere wird unter kaltem Fluss das Fließen der Klebemasse unter Einfluss der Schwerkraft oder einer anderen geringen, permanent, zum Beispiel während der Lagerung wirkenden Kraft wie dem Wickeldruck in einer Klebebandrolle verstanden. Zur Charakterisierung wird der Kriechversuch unter Kompression in Anlehnung an ASTM D2990-01 verwendet (bei 23 °C, 50 % relativer Luftfeuchte, zylindrischer Prüfkörper mit Durchmesser 25 mm, Prüfkörperhöhe 2 mm, Prüfspannung 0,01 MPa). Eine Klebemasse weist insbesondere dann kalten Fluss auf, wenn nach 24 h Belastungszeit eine Dehnung von 10 % überschritten wird. Die elastische Sofortverformung bei Aufgabe der Prüflast wird bei der Ermittlung der Dehnung vernachlässigt.

In der Herstellung des Flächenelements können die Teilflächen T1 und T2 auch zunächst beabstandet voneinander bzw. zur Barriereschicht angeordnet werden. Erst in einem weiteren Schritt wird dann ein Kontakt der Teilflächen (bzw. der Teilflächen zur Barriereschicht) an der Grenzlinie hergestellt, z. B. durch Verpressen, Verfließen oder Expandieren von zumindest einem der Klebstoffe K1 oder K2. Dies kann vorteilhaft genutzt werden, wenn zumindest einer der Klebstoffe K1 oder K2 als Fluid vorliegt oder einen kalten Fluss aufweist.

### Verfahren zur Verklebung zweier Fügeteile:

Ein zweiter Gegenstand der vorliegenden Erfindung ist Verfahren zur Verklebung zweier Fügeteile, wobei das Verfahren die nachfolgenden Schritte in der angegebenen Reihenfolge umfasst:
a) Bereitstellen eines erfindungsgemäßen Flächenelements,
b) Aufbringen des Flächenelements auf ein erstes Fügeteil,
c) Fügen eines zweiten Fügeteils auf das mit dem Flächenelement versehene erste Fügeteil.

Bevorzugt werden die erfindungsgemäßen Flächenelemente für die Verklebung von Bauteilen in der Automobilfertigung, insbesondere für die Verklebung von Anbauteilen nach der Lackierung der Rohkarosserie, für die Verklebung auf Faserverbundkunststoffbauteilen, z. B. von Bauteilen auf Rotorblättern von Windkraftanlagen sowie für die Fixierung von Bauteilen im Bereich der Bau- oder Bauzulieferindustrie, z. B. von Fassadenverkleidungen, Fenstern oder Verscheibungen, verwendet.

Erfindungsgemäß bevorzugt sind daher das erste Fügeteil und/oder das zweite Fügeteil ausgewählt aus Kunststoffen, Metallen, Faserverbundwerkstoffen, Fassadenverkleidungen, Fenstern oder Verscheibungen.

Zudem kann es vorgesehen sein, dass vor Aufbringen des Flächenelements auf ein erstes Fügeteil bzw. vor dem Fügen des zweiten Fügeteils gegebenenfalls auf dem Flächenelement vorhandene Liner L entfernt werden.

Weiterhin kann es vorgesehen sein, dass vor oder nach dem Aufbringen des Flächenelements auf ein erstes Fügeteil bzw. vor oder nach dem Fügen des zweiten Fügeteils eine der Klebemassen K1 und/oder K2 aktiviert werden.

Darüber hinaus kann es auch vorgesehen sein, nach Aufbringen des Flächenelements auf ein erstes Fügeteil bzw. nach dem Fügen des zweiten Fügeteils mechanische Energie aufzubringen, um die Haltbarkeit der Verfügung zu erhöhen.

Bezüglich weiterer bevorzugter Ausführungsformen des erfindungsgemäßen Verfahrens, insbesondere bezüglich des verwendeten Flächenelements, gilt mutatis mutandis das in Bezug auf das erfindungsgemäße Flächenelement Gesagte.

### Kit-of-parts:

Ein dritter Gegenstand der vorliegenden Erfindung ist ein Kit-of-parts, umfassend
a) mindestens ein Fügeteil und
b1) mindestens ein erfindungsgemäßes Flächenelement
dadurch gekennzeichnet, dass das Fügeteil a) und das Flächenelement b1) separat vorliegen oder dass das Flächenelement b1) einseitig auf das mindestens eine Fügeteil a) aufgebracht ist.

Gemäß der ersten Alternative b1 enthält das erfindungsgemäße Kit-of-parts demnach mindestens ein Fügeteil sowie mindestens ein erfindungsgemäßes Flächenelement.

Das Kit-of-parts kann weiterhin eine Gebrauchsanleitung enthalten, in welcher das Fügen beschrieben ist. Das mindestens eine Fügeteil ist bevorzugt ausgewählt aus Kunststoffen, Metallen, Faserverbundwerkstoffen, Fassadenverkleidungen, Fenstern oder Verscheibungen. Bezüglich weiterer bevorzugter Ausführungsformen des erfindungsgemäßen Kit-of-parts, insbesondere bezüglich des verwendeten Flächenelements, der verwendeten Fügeteile sowie der verwendeten Teilflächen T1 und T2, gilt mutatis mutandis das in Bezug auf das erfindungsgemäße Flächenelement sowie das erfindungsgemäße Verfahren Gesagte.

### Verwendung:

Schließlich ist ein letzter Gegenstand der vorliegenden Erfindung ein erfindungsgemäßes Flächenelement zur Verwendung zur Applikation eines Wirkstoffs.

Der Wirkstoff ist dabei in mindestens einer der Klebemassen K1 und/oder K2 des Flächenelements enthalten. Als Wirkstoffe werden Substanzen bezeichnet, welche in einem biologischen Organismus eine spezifische Wirkung haben und eine spezifische Reaktion hervorrufen Der Wirkstoff kann z. B. pharmazeutisch, immunologisch, metabolisch, trophologisch oder kosmetisch wirksam sein. Hierbei verhindert die Barriereschicht die Migration des Wirkstoffs aus der einen in die andere Teilfläche.

### Beschreibung der Figuren:

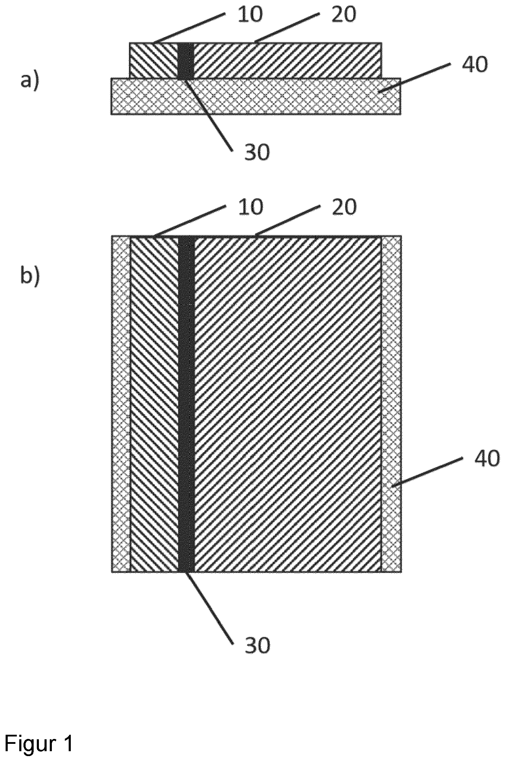

Die Figuren erläutern die Erfindung näher, ohne die Erfindung auf die Darstellungen in den Figuren zu beschränken
Figur 1 zeigt ein erfindungsgemäßes Flächenelement umfassend eine erste Teilfläche T1 bestehend aus einer ersten Klebemasse K1 10, eine zweite Teilfläche T2 bestehend aus einer zweiten Klebemasse K2 20, welche von der ersten Klebemasse verschieden ist, wobei zwischen den beiden Teilflächen T1 und T2 eine Barriereschicht 30 angeordnet ist. Das Flächenelement ist auf einem Liner L 40 angeordnet. Teil a) zeigt einen Querschnitt durch das erfindungsgemäße Flächenelement, Teil b) eine Aufsicht. Die Teilflächen T1 und T2 sind vorteilhaft als Streifen ausgeführt. Somit kann das Flächenelement mit dem Liner L vorteilhaft als Rolle aufgewickelt, gelagert und transportiert werden.

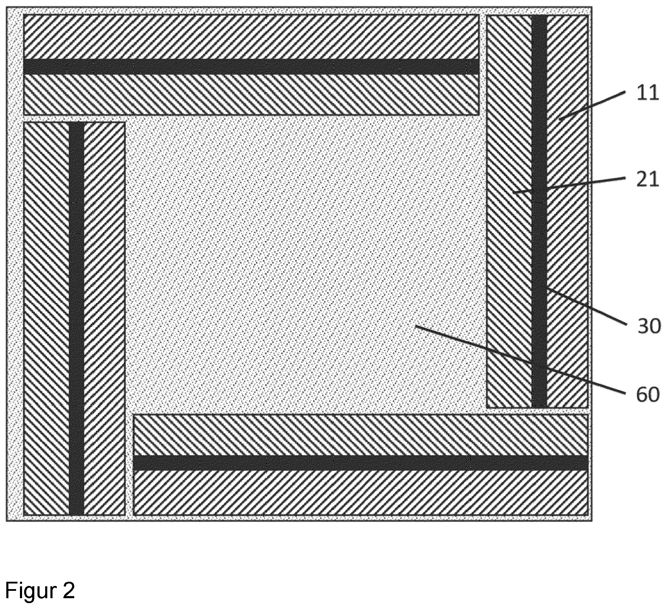

Figur 2 stellt eine bevorzugte Anordnung von mehreren Flächenelementen analog Figur 1 dar, wobei die Flächenelemente auf ein Verklebungssubstrat 60 appliziert wurden und der Liner L jeweils entfernt wurde. Im folgenden Schritt wird ein weiterer Fügepartner (nicht dargestellt) mit den erfindungsgemäßen Flächenelementen (hier in der Ausführung als Klebeband) in Kontakt gebracht, so dass durch die Haftklebemasse K1 11 eine erste vorfixierende Verklebung der Fügepartner hergestellt wird. Nach der Herstellung dieser Verklebung wird die aktivierbare Klebemasse K2 21 ausgehärtet, so dass die Verklebungsfestigkeit ansteigt.

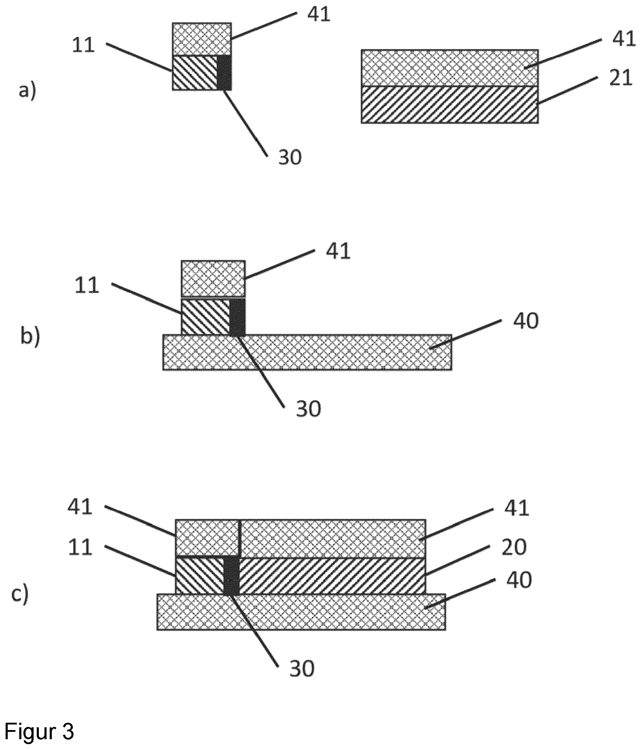

Figur 3 zeigt die Herstellung eines bevorzugten erfindungsgemäßen Flächenelements. Es wird eine Haftklebemasse K1 11 einer ersten Teilfläche T1 mit einer Barriereschicht 30 auf einem Liner L 41 zur Verfügung gestellt. Die Barriereschicht 30 ist bereits in einem vorhergehenden Schritt (nicht dargestellt) auf die Kante der Teilfläche T1 aufgebracht worden, z. B. durch Plasmabeschichtung des Wickelspiegels der Klebebandrolle. Weiterhin wird eine zweite Teilfläche T2, umfassend einen aktivierbaren Haftklebemassefilm K2 21, auf einem Liner L 41 zur Verfügung gestellt (Schritt a)). In den Schritten b) und c) werden die jeweils auf dem Liner L 41 befindlichen Teilflächen T1 und T2 auf einem gemeinsamen Liner L 40 nebeneinander angeordnet, so dass ein erfindungsgemäßes Flächenelement entsteht, welches beidseitig mit jeweils einem Liner L 40, 41 abgedeckt ist. Dieses kann zur Rolle gewickelt werden, wobei alle oder auch nur der Liner L 40 oder die Liner L 41 in der Rolle verbleiben können.

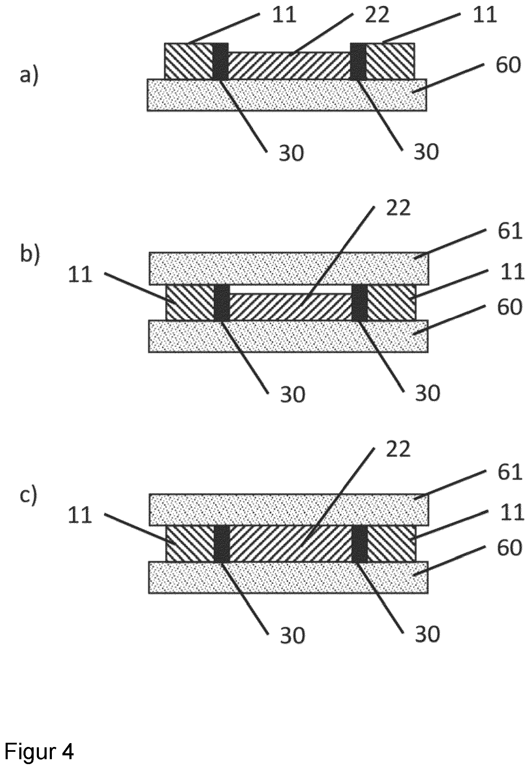

Figur 4 zeigt einen bevorzugten Aufbau eines erfindungsgemäßen Flächenelements, bei welchem eine expandierbare, aktivierbare zweite Klebemasse K2 22 zwischen zwei haftklebrigen ersten Klebemassen K1 11 angeordnet ist, wobei zwischen den verschiedenen Klebemassen jeweils eine Barriereschicht 30 angeordnet ist. Das erfindungsgemäße Flächenelement wurde als Klebeband zur Verfügung gestellt und ist bereits auf einem Substrat 60 verklebt. In Schritt b) wird ein weiterer Fügepartner 61 appliziert. In Schritt c) wird die aktivierbare Klebemasse K2 22 aktiviert und schäumt dabei auf, so dass ein Kontakt zum Fügepartner 61 hergestellt wird und eine Verklebung zustande kommt.

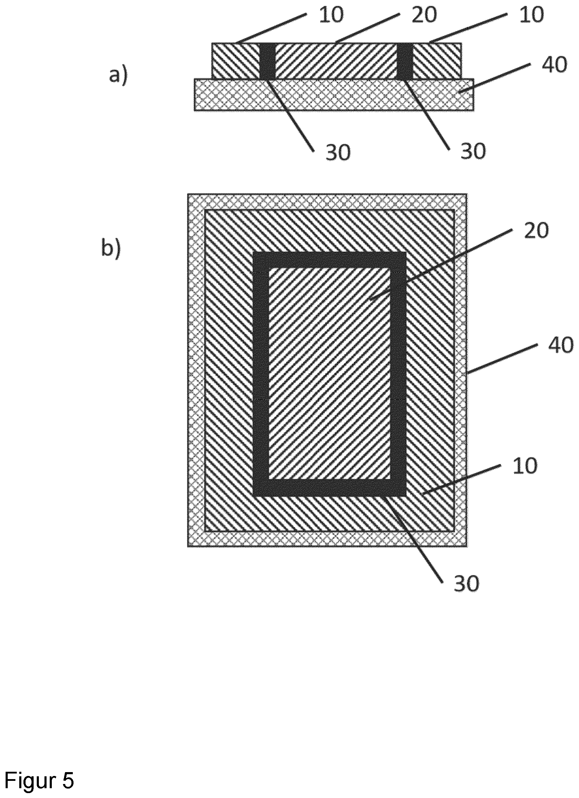

Figur 5 zeigt ein bevorzugtes erfindungsgemäßes Flächenelement, bei welchem die zumindest zwei Teilflächen T1 und T2 ineinander angeordnet liegen. Am inneren Umfang der ersten Teilfläche T1 aus einer ersten Klebemasse K1 10 ist eine Barriereschicht 30 angeordnet, welche eine Permeation von Formulierungsbestandteilen vom äußeren Umfang der zweiten Teilfläche aus der zweiten Klebemasse K2 20 in die erste Klebemasse K1 10 oder umgekehrt verhindert. Das Flächengebilde wird auf einem Liner L 40 angeordnet zur Verfügung gestellt, so dass die Teilflächen T1 und T2 sowie die Barriereschicht 30 gemeinsam auf ein Fügeteil 60, 61 applizierbar sind.

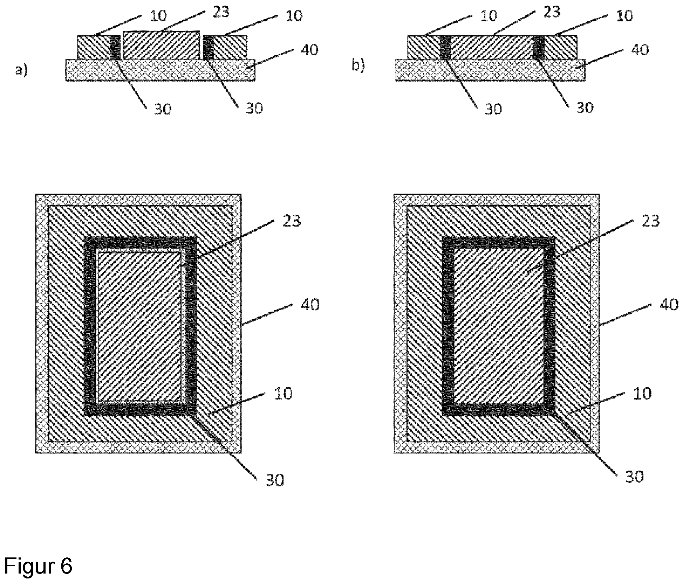

Figur 6 zeigt ein erfindungsgemäßes Flächenelement analog Figur 5, bei welchem die zweite Klebemasse K2 eine aktivierbare Haftklebemasse mit kaltem Fluss 23 ist. Unter a) ist der Zustand unmittelbar nach der Herstellung des Flächenelements gezeigt: Die innere Teilfläche T2 besteht aus einer Klebemasse K2 23 mit kaltem Fluss, bevorzugt einer aktivierbaren Haftklebemasse mit kaltem Fluss. Vorteilhaft an dieser Auswahl ist, dass die zweite Teilfläche T2 zunächst beabstandet zur ersten Teilfläche T1 angeordnet werden kann, was zu einer Herstellvereinfachung führt. Während der Lagerung des Flächenelements fließt die zweite Klebemasse K2 in den zur Verfügung stehenden Raum aus, so dass sie in Kontakt mit der Barriereschicht 30 kommt (Figur 6 b)). Vorteilhaft wird die Klebemasse K2 mit dem kalten Fluss dicker ausgeführt als die erste Teilfläche T1 aus einer verschiedenen Klebemasse K1 10. Im unteren Teil der Figuren 6a) und 6b) ist jeweils die Aufsicht dargestellt.

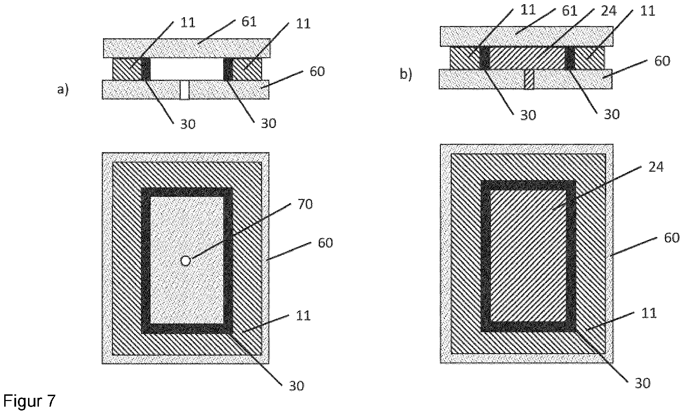

Figur 7 zeigt ein bevorzugtes erfindungsgemäßes Flächenelement, bei welchem die zumindest zwei Teilflächen T1 und T2 erst bei der Herstellung der Verklebung nebeneinander angeordnet vorliegen. In Figur 7 a) ist zunächst eine Verklebung mittels einer ersten Haftklebemasse K1 hergestellt. Bevorzugt ist die Haftklebemasse K1 11 bereits mit der Barriereschicht 30 ausgerüstet, diese kann aber auch nach dem Aufbringen der Haftklebemasse K1 auf das erste Substrat 60 oder sogar nach der Herstellung der gezeigten Verklebung z. B. durch Plasmabeschichtung oder mittels eines fluiden Beschichtungsmittels hergestellt werden. Dies kann z. B. durch die Öffnung 70 in einem der Fügeteile 60 erfolgen. In Figur 7 b) wurde ein reaktiver Flüssigklebstoff K2 24 durch die Öffnung 70 eingeführt und das erfindungsgemäße Flächenelement hergestellt. Die Barriereschicht 30 verhindert, dass Bestandteile aus dem Reaktivklebstoff 24 in den Haftklebstoff 11 oder umgekehrt migrieren, insbesondere in dem Zeitraum vom Einfüllen zur vollständigen Aushärtung des Flüssigklebstoffs. Im unteren Teil der Figuren 7a) und 7b) ist jeweils ein Schnitt der Aufsicht dargestellt.

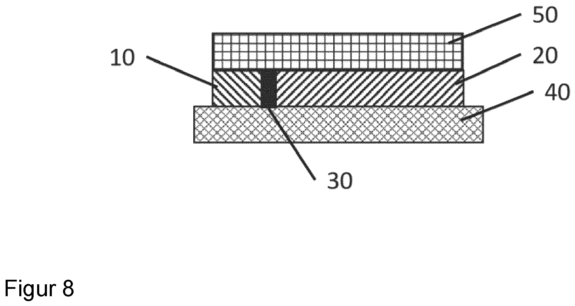

In Figur 8 ist ein bevorzugtes erfindungsgemäßes Flächenelement dargestellt, bei welchem die beiden Klebemassen K1 10 und K2 20 sowie die Barriereschicht 30 zumindest teilweise mit einem Trägermaterial TM 50 sowie einem Liner L 40 abgedeckt sind. Anders als der abdeckende Liner im Aufbau in Figur 3 verbleibt das Trägermaterial TM 59 auch nach der Herstellung einer Verklebung im Verbund. Bevorzugt wird das erfindungsgemäße Flächenelement mit dem Trägermaterial TM 50 im Verbund bereitgestellt, etwa als zur Rolle gewickeltes Klebeband oder als Klebebandabschnitt.

Die Erfindung betrifft insbesondere die folgenden Ausführungsformen:
Nach einer ersten Ausführungsform betrifft die vorliegende Erfindung ein Flächenelement, welches
a) mindestens eine erste Teilfläche T1 einer ersten Klebemasse K1 10, 11,
b) mindestens eine zweite Teilfläche T2 einerzweiten Klebemasse K2 20, 21, 22, 23, 24, welche von der Klebemasse K1 verschieden ist, und
c) mindestens eine Barriereschicht 30 umfasst,

wobei die mindestens eine erste Teilfläche T1 und die mindestens eine zweite Teilfläche T2 nebeneinander in einer Ebene angeordnet sind,
dadurch gekennzeichnet, dass
die Barriereschicht 30 im Wesentlichen senkrecht zwischen der mindestens einen ersten Teilfläche T1 und der mindestens einen zweiten Teilfläche T2 angeordnet ist.

Nach einer zweiten Ausführungsform betrifft die vorliegende Erfindung ein Flächenelement nach Ausführungsform 1, dadurch gekennzeichnet, dass die mindestens eine erste Teilfläche T1 und die mindestens eine zweite Teilfläche T2 in einer Ebene parallel zur Hauptausdehnung des Flächenelements nebeneinander angeordnet sind oder die mindestens eine erste Teilfläche T1 die mindestens eine zweite Teilfläche T2 in einer Ebene insbesondere vollständig umschließt.

Nach einer dritten Ausführungsform betrifft die vorliegende Erfindung ein Flächenelement nach einer der Ausführungsformen 1 oder 2, dadurch gekennzeichnet, dass die erste Klebemasse K1 10, 11 und/oder die zweite Klebemasse K2 20, 21, 22, 23, 24 ausgewählt sind aus der Gruppe bestehend aus expandierbaren Klebemassen, aktivierbaren Klebemassen, Haftklebemassen, aktivierbaren Haftklebemassen, expandierbaren Haftklebemassen sowie deren Mischungen.

Nach einer vierten Ausführungsform betrifft die vorliegende Erfindung ein Flächenelement nach einer der vorangehenden Ausführungsformen, dadurch gekennzeichnet, dass es sich bei der ersten Klebemasse K1 10, 11 um eine Haftklebemasse, insbesondere eine acrylatbasierte Haftklebemasse, handelt.

Nach einer fünften Ausführungsform betrifft die vorliegende Erfindung ein Flächenelement nach einer vorangehenden der Ausführungsformen, dadurch gekennzeichnet, dass es sich bei der zweiten Klebemasse K2 20, 21, 22, 23, 24 um eine aktvierbare Klebemasse handelt, welche eine dynamische Viskosität von 10⁻¹ bis 10⁸ Pa*s (gemessen mittels DIN 53019-1:2008-09 oder ISO 6721-10:1999-12 bei 25 °C) aufweist oder welche in Form eines Films vorliegt.

Nach einer sechsten Ausführungsform betrifft die vorliegende Erfindung ein Flächenelement nach einer vorangehenden der Ausführungsformen, dadurch gekennzeichnet, dass es sich bei der ersten Klebemasse K1 10, 11 oder der zweiten Klebemasse K2 20, 21, 22, 23, 24 um eine aktivierbare Haftklebemasse handelt.

Nach einer siebten Ausführungsform betrifft die vorliegende Erfindung ein Flächenelement nach einer der Ausführungsformen 1 bis 3, dadurch gekennzeichnet, dass es sich bei der ersten Klebemasse K1 10, 11 und/oder bei der zweiten Klebemasse K2 20, 21, 22, 23, 24 um eine expandierbare Klebemasse handelt.

Nach einer achten Ausführungsform betrifft die vorliegende Erfindung ein Flächenelement nach einer der Ausführungsformen 1 bis 3, dadurch gekennzeichnet, dass es sich bei der ersten Klebemasse K1 10, 11 und bei der zweiten Klebemasse K2 20, 21, 22, 23, 24 jeweils um eine Haftklebemasse handelt.

Nach einer neunten Ausführungsform betrifft die vorliegende Erfindung ein Flächenelement nach einer vorangehenden der Ausführungsformen, dadurch gekennzeichnet, dass die Barriereschicht 30 eine Dicke von 20 nm bis 500 µm, vorzugsweise von 20 nm bis 1 µm oder von 500 nm bis 50 µm, aufweist.

Nach einer zehnten Ausführungsform betrifft die vorliegende Erfindung ein Flächenelement nach einer vorangehenden der Ausführungsformen, dadurch gekennzeichnet, dass die Barriereschicht 30 ausgewählt ist aus der Gruppe von (i) Metallen, Metallverbindungen, wie Metalloxiden, Metallnitriden und Metallhydronitriden, Halbmetallen und Halbmetallverbindungen, insbesondere Halbmetalloxiden, Halbmetallnitriden und Halbmetallhydronitriden, sowie dotierten Halbmetallen, (ii) organisch-anorganischen Hybridschichten, (iii) organischen Barriereschichten, wie Polyamiden, Ethylenvinylalkoholen (EVOH), Polyvinylalkohol (PVOH), Polyvinylidenchloriden (PVDC), Flüssigkristallpolymeren (LCP), Polyethylenen und dessen Copolymeren, Nitril-Copolymeren, Fluorpolymeren, Polypropylenen, Polyestern, Polyvinylchloriden, Polystyrolen, Polylactiden, sowie (iv) deren Mischungen, insbesondere Polyamiden, Ethylenvinylalkoholen (EVOH), Polyvinylalkohol (PVOH), Polyvinylidenchloriden (PVDC) und Nitril-Copolymeren.

Nach einer elften Ausführungsform betrifft die vorliegende Erfindung ein Flächenelement nach Ausführungsform 10, dadurch gekennzeichnet, dass die Barriereschicht 30 ausgewählt ist aus Metallen, Metallverbindungen sowie dotierten Metallen und Metallverbindungen, welche aus einem Plasma heraus, besonders bevorzugt unter Atmosphärendruck, abgeschieden wurden.

Nach einer zwölften Ausführungsform betrifft die vorliegende Erfindung ein Flächenelement nach einer vorangehenden der Ausführungsformen, dadurch gekennzeichnet, dass die Barriereschicht 30 eine Permeationsbarriere gegen Wasserdampf (WVTR) von < 100 g/(m²*d) und/oder gegen Sauerstoff (OTR) von < 1000 cm³/(m²*d*bar), jeweils bezogen auf die Dicke der Barriereschicht und gemessen gemäß ASTM F-1249-13 (WVTR, 38° C und 90 % relativer Luftfeuchtigkeit) bzw. DIN 53380-3:1998-07 (OTR, 23° C und 50 % relativer Luftfeuchtigkeit), aufweist.

Nach einer dreizehnten Ausführungsform betrifft die vorliegende Erfindung ein Flächenelement nach einer der vorangehenden Ausführungsformen, dadurch gekennzeichnet, dass es zusätzlich mindestens einen Liner L 40, 41 und/oder ein Trägermaterial TM 50 umfasst, wobei die mindestens eine erste Teilfläche T1 und/oder die mindestens eine zweite Teilfläche T2 auf dem Liner L 40, 41 und/oder dem Trägermaterial TM 50 angeordnet sind.

Nach einer vierzehnten Ausführungsform betrifft die vorliegende Erfindung ein Verfahren zur Herstellung eines Flächenelements nach einer der Ausführungsformen 1 bis 13, dadurch gekennzeichnet, dass das Flächenelement in einem oder in mehreren aufeinander folgenden Schritten, insbesondere in mehreren aufeinanderfolgenden Schritten, hergestellt wird.

Nach einer fünfzehnten Ausführungsform betrifft die vorliegende Erfindung ein Verfahren zur Herstellung eines Flächenelements nach Ausführungsform 14, dadurch gekennzeichnet, dass zuerst eine erste Teilfläche T1 hergestellt, diese dann an der zur späteren Teilfläche T2 zeigenden Seite mit der Barriereschicht 30 versehen und sodann die zweite Teilfläche T2 angefügt wird.

Nach einer sechzehnten Ausführungsform betrifft die vorliegende Erfindung ein Verfahren zur Herstellung eines Flächenelements nach einer der Ausführungsformen 14 oder 15, dadurch gekennzeichnet, dass die Barriereschicht 30 durch einen Atmosphärendruck-Plasmastrom unter Verwendung von organischen polyfunktionellen Silanen hergestellt wird.

Nach einer siebzehnten Ausführungsform betrifft die vorliegende Erfindung ein Verfahren zur Verklebung zweier Fügeteile, wobei das Verfahren die nachfolgenden Schritte in der angegebenen Reihenfolge umfasst:
a) Bereitstellen eines Flächenelements nach einer der Ausführungsformen 1 bis 13,
b) Aufbringen des Flächenelements auf ein erstes Fügeteil 60,
c) Fügen eines zweiten Fügeteils 61 auf das mit dem Flächenelement versehene ersten Fügeteil.

Nach einer achtzehnten Ausführungsform betrifft die vorliegende Erfindung ein Verfahren zur Verklebung zweier Fügeteile nach Ausführungsform 17, dadurch gekennzeichnet, dass das erste Fügeteil 60 und/oder das zweite Fügeteil 61 ausgewählt sind aus Kunststoffen, Metallen, Faserverbundwerkstoffen, Fassadenverkleidungen, Fenstern oder Verscheibungen.

Nach einer neunzehnten Ausführungsform betrifft die vorliegende Erfindung ein Kit-of-parts, umfassend
a) mindestens ein Fügeteil 60, 61 und
b1) mindestens ein Flächenelement nach einer der Ausführungsformen 1 bis 13 oder
b2) mindestens eine erste Teilfläche T1 oder T2 sowie mindestens eine zweite Teilfläche T2 oder T1, wobei mindestens eine Teilfläche T1 oder T2 mit einer Barriereschicht versehen ist und wobei die erste und die zweite Teilfläche separat voneinander vorliegen,
dadurch gekennzeichnet, dass das Fügeteil a) und das Flächenelement b1) oder die Teilflächen T1 und T2 b2) separat vorliegen oder dass das Flächenelement b1) oder die erste Teilfläche b2) einseitig auf das mindestens eine Fügeteil a) aufgebracht ist.

Nach einer zwanzigsten Ausführungsform betrifft die vorliegende Erfindung die Verwendung eines Flächenelements nach einer der Ausführungsformen 1 bis 13 zur Applikation eines Wirkstoffs.

### Bezugszeichenliste:

10: erste Klebemasse K1
11: Haftklebemasse K1
20: zweite Klebemasse K2
21: aktivierbare Haftklebemasse K2
22: expandierbare aktivierbare Klebemasse K2
23: aktivierbare Haftklebemasse mit kaltem Fluss K2
24: reaktiver Flüssigklebstoff K2
30: Barriereschicht
40: Liner L
41: Liner L
50: Trägermaterial TM
60: erstes Verklebungssubstrat (erster Fügepartner)
61: zweites Verklebungssubstrat (zweiter Fügepartner)
70: Öffnung

## Patentansprüche

1. Flächenelement, welches
a) mindestens eine erste Teilfläche T1 einer ersten Klebemasse K1 (10, 11),
b) mindestens eine zweite Teilfläche T2 einer zweiten Klebemasse K2 (20, 21, 22, 23, 24), welche von der Klebemasse K1 verschieden ist, und
c) mindestens eine Barriereschicht (30) umfasst,
wobei die mindestens eine erste Teilfläche T1 und die mindestens eine zweite Teilfläche T2 nebeneinander in einer Ebene angeordnet sind,
**dadurch gekennzeichnet, dass**
die Barriereschicht (30) im Wesentlichen senkrecht zwischen der mindestens einen ersten Teilfläche T1 und der mindestens einen zweiten Teilfläche T2 angeordnet ist.

2. Flächenelement nach Anspruch 1, **dadurch gekennzeichnet, dass** die mindestens eine erste Teilfläche T1 und die mindestens eine zweite Teilfläche T2 in einer Ebene parallel zur Hauptausdehnung des Flächenelements nebeneinander angeordnet sind oder die mindestens eine erste Teilfläche T1 die mindestens eine zweite Teilfläche T2 in einer Ebene insbesondere vollständig umschließt.

3. Flächenelement nach einem der Ansprüche 1 oder 2, **dadurch gekennzeichnet, dass** die erste Klebemasse K1 (10, 11) und/oder die zweite Klebemasse K2 (20, 21, 22, 23, 24) ausgewählt sind aus der Gruppe bestehend aus expandierbaren Klebemassen, aktivierbaren Klebemassen, Haftklebemassen, aktivierbaren Haftklebemassen, expandierbaren Haftklebemassen sowie deren Mischungen.

4. Flächenelement nach einem der vorangehenden Ansprüche, **dadurch gekennzeichnet, dass** es sich bei der ersten Klebemasse K1 (10, 11) um eine Haftklebemasse, insbesondere eine acrylatbasierte Haftklebemasse, handelt.

5. Flächenelement nach einem der vorangehenden Ansprüche, **dadurch gekennzeichnet, dass** es sich bei der zweiten Klebemasse K2 (20, 21, 22, 23, 24) um eine aktvierbare Klebemasse handelt, welche eine dynamische Viskosität von 10⁻¹ bis 10⁸ Pa*s gemessen mittels DIN 53019-1:2008-09 oder ISO 6721-10:1999-12 bei 25 °C aufweist oder welche in Form eines Films vorliegt.

6. Flächenelement nach einem der Ansprüche 1 bis 3, **dadurch gekennzeichnet, dass** es sich bei der ersten Klebemasse K1 (10, 11) und/oder bei der zweiten Klebemasse K2 (20, 21, 22, 23, 24) um eine expandierbare Klebemasse handelt.

7. Flächenelement nach einem der Ansprüche 1 bis 3, **dadurch gekennzeichnet, dass** es sich bei der ersten Klebemasse K1 (10, 11) und bei der zweiten Klebemasse K2 (20, 21, 22, 23, 24) jeweils um eine Haftklebemasse handelt, wobei bevorzugt die erste Klebemasse K1 (10, 11) oder die zweite Klebemasse K2 (20, 21, 22, 23, 24) eine aktivierbare Haftklebemasse ist.

8. Flächenelement nach einem der vorangehenden Ansprüche, **dadurch gekennzeichnet, dass** die Barriereschicht (30) eine Dicke von 20 nm bis 500 µm, vorzugsweise von 20 nm bis 1 µm oder von 500 nm bis 50 µm, aufweist.

9. Flächenelement nach einem der vorangehenden Ansprüche, **dadurch gekennzeichnet, dass** die Barriereschicht (30) ausgewählt ist aus der Gruppe von (i) Metallen, Metallverbindungen, insbesondere Metalloxiden, Metallnitriden und Metallhydronitriden, Halbmetallen und Halbmetallverbindungen, insbesondere Halbmetalloxiden, Halbmetallnitriden und Halbmetallhydronitriden, sowie dotierten Halbmetallen, (ii) organisch-anorganischen Hybridschichten, (iii) organischen Barriereschichten, wie Polyamiden, Ethylenvinylalkoholen (EVOH), Polyvinylalkohol (PVOH), Polyvinylidenchloriden (PVDC), Flüssigkristallpolymeren (LCP), Polyethylenen und dessen Copolymeren, Nitril-Copolymeren, Fluorpolymeren, Polypropylenen, Polyestern, Polyvinylchloriden, Polystyrolen, Polylactiden, sowie (iv) deren Mischungen, insbesondere Polyamiden, Ethylenvinylalkoholen (EVOH), Polyvinylalkohol (PVOH), Polyvinylidenchloriden (PVDC) und Nitril-Copolymeren.

10. Flächenelement nach einem der vorangehenden Ansprüche, **dadurch gekennzeichnet, dass** die Barriereschicht (30) eine Permeationsbarriere gegen Wasserdampf (WVTR) von < 100 g/(m²*d) und/oder gegen Sauerstoff (OTR) von < 1000 cm³/(m²*d*bar), jeweils bezogen auf die Dicke der Barriereschicht und gemessen gemäß ASTM F-1249-13 WVTR, 38° C und 90 % relativer Luftfeuchtigkeit bzw. DIN 53380-3:1998-07 OTR, 23° C und 50 % relativer Luftfeuchtigkeit aufweist.

11. Flächenelement nach einem der vorangehenden Ansprüche, **dadurch gekennzeichnet, dass** es zusätzlich mindestens einen Liner L (40, 41) und/oder ein Trägermaterial TM (50) umfasst, wobei die mindestens eine erste Teilfläche T1 und/oder die mindestens eine zweite Teilfläche T2 auf dem Liner L (40, 41) und/oder dem Trägermaterial TM (50) angeordnet sind.

12. Verfahren zur Verklebung zweier Fügeteile, wobei das Verfahren die nachfolgenden Schritte in der angegebenen Reihenfolge umfasst:
a) Bereitstellen eines Flächenelements nach einem der Ansprüche 1 bis 11,
b) Aufbringen des Flächenelements auf ein erstes Fügeteil (60),
c) Fügen eines zweiten Fügeteils (61) auf das mit dem Flächenelement versehene ersten Fügeteil.

13. Verfahren zur Verklebung zweier Fügeteile nach Anspruch 12, **dadurch gekennzeichnet, dass** das erste Fügeteil (60) und/oder das zweite Fügeteil (61) ausgewählt sind aus Kunststoffen, Metallen, Faserverbundwerkstoffen, Fassadenverkleidungen, Fenstern oder Verscheibungen.

14. Kit-of-parts, umfassend
a) mindestens ein Fügeteil (60, 61) und
b1) mindestens ein Flächenelement nach einem der Ansprüche 1 bis 11,
**dadurch gekennzeichnet, dass** das Fügeteil a) und das Flächenelement b1) separat vorliegen oder dass das Flächenelement b1) einseitig auf das mindestens eine Fügeteil a) aufgebracht ist.

15. Flächenelement nach einem der Ansprüche 1 bis 11 zur Verwendung zur Applikation eines Wirkstoffs.

## Claims

1. Sheetlike element which comprises
a) at least one first subarea T1 of a first adhesive K1 (10, 11),
b) at least one second subarea T2 of a second adhesive K2 (20, 21, 22, 23, 24), which is different from the adhesive K1, and
c) at least one barrier layer (30),
where the at least one first subarea T1 and the at least one second subarea T2 are arranged next to one another in a plane,
**characterized in that**
the barrier layer (30) is arranged substantially perpendicularly between the at least one first subarea T1 and the at least one second subarea T2.

2. Sheetlike element according to Claim 1, **characterized in that** the at least one first subarea T1 and the at least one second subarea T2 are arranged next to one another in a plane parallel to the principal extent of the sheetlike element or the at least one first subarea T1 encloses, in particular completely, the at least one second subarea T2 in a plane.

3. Sheetlike element according to either of Claims 1 and 2, **characterized in that** the first adhesive K1 (10, 11) and/or the second adhesive K2 (20, 21, 22, 23, 24) are/is selected from the group consisting of expandable adhesives, activatable adhesives, pressure-sensitive adhesives, activatable pressure-sensitive adhesives, expandable pressure-sensitive adhesives and mixtures thereof.

4. Sheetlike element according to any of the preceding claims, **characterized in that** the first adhesive K1 (10, 11) is a pressure-sensitive adhesive, more particularly an acrylate-based pressure-sensitive adhesive.

5. Sheetlike element according to any of the preceding claims, **characterized in that** the second adhesive K2 (20, 21, 22, 23, 24) is an activatable adhesive which has a dynamic viscosity of 10⁻¹ to 10⁸ Pa*s as measured via DIN 53019-1:2008-09 or ISO 6721-10:1999-12 at 25°C or which is in the form of a film.

6. Sheetlike element according to any of Claims 1 to 3, **characterized in that** the first adhesive K1 (10, 11) and/or the second adhesive K2 (20, 21, 22, 23, 24) are/is an expandable adhesive.

7. Sheetlike element according to any of Claims 1 to 3, **characterized in that** the first adhesive K1 (10, 11) and the second adhesive K2 (20, 21, 22, 23, 24) are each a pressure-sensitive adhesive, the first adhesive K1 (10, 11) or the second adhesive K2 (20, 21, 22, 23, 24) preferably being an activatable pressure-sensitive adhesive.

8. Sheetlike element according to any of the preceding claims, **characterized in that** the barrier layer (30) has a thickness of 20 nm to 500 µm, preferably of 20 nm to 1 µm or of 500 nm to 50 µm.

9. Sheetlike element according to any of the preceding claims, **characterized in that** the barrier layer (30) is selected from the group of (i) metals, metal compounds, especially metal oxides, metal nitrides and metal hydronitrides, semimetals and semimetal compounds, especially semimetal oxides, semimetal nitrides and semimetal hydronitrides, and doped semimetals, (ii) organic-inorganic hybrid layers, (iii) organic barrier layers, such as polyamides, ethylene-vinyl alcohols (EVOH), polyvinyl alcohol (PVOH), polyvinylidene chlorides (PVDC), liquid-crystal polymers (LCP), polyethylenes and copolymers thereof, nitrile copolymers, fluoropolymers, polypropylenes, polyesters, polyvinyl chlorides, polystyrenes, polylactides, and (iv) mixtures thereof, especially polyamides, ethylene-vinyl alcohols (EVOH), polyvinyl alcohol (PVOH), polyvinylidene chlorides (PVDC) and nitrile copolymers.

10. Sheetlike element according to any of the preceding claims, **characterized in that** the barrier layer (30) exhibits a water vapour permeation barrier (WVTR) of < 100 g/(m²*d) and/or an oxygen permeation barrier (OTR) of < 1000 cm³/(m²*d*bar), in each case based on the thickness of the barrier layer and measured according to ASTM F-1249-13 WVTR, 38°C and 90% relative humidity and respectively according to DIN 53380-3:1998-07 OTR, 23°C and 50% relative humidity.

11. Sheetlike element according to any of the preceding claims, **characterized in that** it further comprises at least one liner L (40, 41) and/or a carrier material TM (50), the at least one first subarea T1 and/or the at least one second subarea T2 being disposed on the liner L (40, 41) and/or on the carrier material TM (50).

12. Method for bonding two adherends, the method comprising the following steps in the specified order:
a) providing a sheetlike element according to any of Claims 1 to 11,
b) applying the sheetlike element to a first adherend (60),
c) joining a second adherend (61) to the first adherend provided with the sheetlike element.

13. Method for bonding two adherends according to Claim 12, **characterized in that** the first adherend (60) and/or the second adherend (61) are selected from plastics, metals, fibre composites, facade panels, windows or glazing systems.

14. Kit of parts, comprising
a) at least one adherend (60, 61) and
b1) at least one sheetlike element according to any of Claims 1 to 11,
**characterized in that** the adherend a) and the sheetlike element b1) are present separately or **in that** the at least one adherend a) bears the sheetlike element b1) applied on one side.

15. Sheetlike element according to any of Claims 1 to 11 for use for the administration of an active ingredient.

## Revendications

1. Élément de surface, qui comprend
a) au moins une première surface T1 d'une première masse adhésive K1 (10, 11),
b) au moins une deuxième surface partielle T2 d'une deuxième masse adhésive K2 (20, 21, 22, 23, 24), qui est différente de la masse adhésive K1, et
c) au moins une couche barrière (30),
dans lequel l'au moins une surface partielle T1 et l'au moins une deuxième surface partielle T2 sont disposées l'une à côté de l'autre dans un plan,
**caractérisé en ce que**
la couche barrière (30) est disposée pour l'essentiel perpendiculairement entre l'au moins une première surface partielle T1 et l'au moins une deuxième surface partielle T2.

2. Élément de surface selon la revendication 1, **caractérisé en ce que** l'au moins une première surface partielle T1 et l'au moins une deuxième surface partielle T2 sont disposées dans un plan l'une à côté de l'autre, parallèlement à l'extension principale de l'élément de surface, ou l'au moins une première surface partielle T1 entoure en particulier complètement l'au moins une deuxième surface T2 dans un plan.

3. Élément de surface selon l'une des revendications 1 ou 2, **caractérisé en ce que** la première masse adhésive K1 (10, 11) et/ou la deuxième masse adhésive K2 (20, 21, 22, 23, 24) sont choisies dans le groupe consistant en les masses adhésives expansibles, les masses adhésives activables, les masses adhésives de contact, les masses adhésives de contact activables, les masses adhésives de contact expansibles, ainsi que leurs mélanges.

4. Élément de surface selon l'une des revendications précédentes, **caractérisé en ce que** la première masse adhésive K1 (10, 11) est une masse adhésive de contact, en particulier une masse adhésive de contact à base d'acrylate.

5. Élément de surface selon l'une des revendications précédentes, **caractérisé en ce que** la deuxième masse adhésive K2 (20, 21, 22, 23, 24) est une masse adhésive activable, qui présente une viscosité dynamique de 10⁻¹ à 10⁸ Pa*s, mesurée selon DIN 53019-1:2008-09 ou ISO 6721-10:1999-12 à 25 °C, ou qui se présente sous forme d'un film.

6. Élément de surface selon l'une des revendications 1 à 3, **caractérisé en ce que** la première masse adhésive K1 (10, 11) et/ou la deuxième masse adhésive K2 (20, 21, 22, 23, 24) sont des masses adhésives expansibles.

7. Élément de surface selon l'une des revendications 1 à 3, **caractérisé en ce que** chacune de la première masse adhésive K1 (10, 11) et de la deuxième masse adhésive K2 (20, 21, 22, 23, 24) est une masse adhésive de contact, la première masse adhésive K1 (10, 11) ou la deuxième masse adhésive K2 (20, 21, 22, 23, 24) étant une masse adhésive de contact activable.

8. Élément de surface selon l'une des revendications précédentes, **caractérisé en ce que** la couche barrière (30) présente une épaisseur de 20 nm à 500 µm, de préférence de 20 nm à 1 µm ou de 500 nm à 50 µm.

9. Élément de surface selon l'une des revendications précédentes, **caractérisé en ce que** la couche barrière (30) est choisie dans le groupe des (i) métaux, composés métalliques, en particulier oxydes métalliques, nitrures métalliques ou hydronitrures métalliques, métalloïdes et composés de métalloïdes, en particulier oxydes de métalloïdes, nitrures de métalloïdes et hydronitrures de métalloïdes ainsi que métalloïdes dopés, (ii) couches hybrides organiques-inorganiques, (iii) couches barrière organiques, telles que polyamides, éthylène-alcools vinyliques (EVOH), poly(alcool vinylique) (PVOH), poly(chlorures de vinylidène) (PVDC), polymères cristallins liquides (LCP), polyéthylènes et leurs copolymères, copolymères de nitrile, fluoropolymères, polypropylènes, polyesters, poly(chlorures de vinyle), polystyrènes, polylactides, ainsi que (iv) leurs mélanges, en particulier polyamides, éthylène-alcools vinyliques (EVOH), poly(alcool vinylique) (PVOH), poly(chlorures de vinylidène) (PVDC) et copolymères de nitrile.

10. Élément de surface selon l'une des revendications précédentes, **caractérisé en ce que** la couche barrière (30) est une barrière à la perméation de la vapeur d'hydrogène (WVTR) de < 100 g/(m²*d) et/ou de l'oxygène (OTR) de < 1 000 cm³/(m²*d*bar), dans chaque cas par rapport à l'épaisseur de la couche barrière, et mesurée respectivement selon ASTM F-1249-13 WVTR, 38 °C et 90 % d'humidité relative de l'air, et DIN 53380-3:1998-07 OTR, 23 °C et 50 % d'humidité relative de l'air.

11. Élément de surface selon l'une des revendications précédentes, **caractérisé en ce qu'**il comprend en outre au moins un revêtement intérieur L (40, 41) et/ou un matériau support TM (50), l'au moins une première surface partielle T1 et/ou l'au moins une deuxième surface partielle T2 étant disposées sur le revêtement intérieur L (40, 41) et/ou sur le matériau support TM (50) .

12. Procédé de collage de deux pièces à assembler, le procédé comprenant dans l'ordre indiqué les étapes suivantes :
a) fourniture d'un élément de surface selon l'une des revendications 1 à 11,
b) application de l'élément de surface sur une première pièce à assembler (60),
c) assemblage d'une deuxième pièce à assembler (61) sur la première pièce à assembler pourvue de l'élément de surface.

13. Procédé de collage de deux pièces à assembler selon la revendication 12, **caractérisé en ce que** la première pièce à assembler (60) et/ou la deuxième pièce à assembler (61) sont choisies parmi les plastiques, les métaux, les matériaux composites renforcés par des fibres, les revêtements de façade, les fenêtres ou les vitrages.

14. Jeu de pièces, comprenant
a) au moins une pièce à assembler (60, 61) et
b1) au moins un élément de surface selon l'une des revendications 1 à 11,
**caractérisé en ce que** la pièce à assembler a) et l'élément de surface b1) se présentent séparément, ou **en ce que** l'élément de surface b1) est appliqué sur une face sur au moins une pièce à assembler a).

15. Élément de surface selon l'une des revendications 1 à 11 pour utilisation pour application d'un adjuvant.
